# EUROPEAN PATENT APPLICATION

(11) **EP 4 693 519 A1**
(43) Date of publication of application: **11.02.2026**
(21) Application number: 25194134.0
(22) Date of filing: 05.08.2025
(51) Int. Cl.: H01M 4/62, H01M 4/133

(54) **NEGATIVE ELECTRODES AND RECHARGEABLE LITHIUM BATTERIES INCLUDING THE SAME**

(30) Priority: 06.08.2024 KR 20240104829
(71) Applicant: SAMSUNG SDI CO., LTD., Yongin-si, Gyeonggi-do 17084 (KR); Korea Advanced Institute of Science and Technology, Daejeon Gyeonggi-do 34141 (KR)
(72) Inventor: JEONG, Hanmam, Gyeonggi-do 17084 (KR); WOO, Myungheui, Gyeonggi-do 17084 (KR); CHOI, Nam-Soon, Daejeon 34141 (KR); YU, Arum, Gyeonggi-do 17084 (KR); GOH, Aehui, Gyeonggi-do 17084 (KR); SONG, Chaeeun, Daejeon 34141 (KR); PARK, Sewon, Gyeonggi-do 17084 (KR); KIM, Seungwon, Daejeon 34141 (KR); KIM, Minkyu, Daejeon 34141 (KR)
(74) Representative: Maiwald GmbH

(57) **Abstract**

A negative electrode and a rechargeable lithium battery including the negative electrode are disclosed. The negative electrode may include a negative electrode current collector; and a negative electrode active material layer on the negative electrode current collector; wherein the negative electrode active material layer includes a negative electrode active material and an additive, and the additive includes a compound that coagulates at conditions of pH 5.5 or lower and/or 90 °C or higher. The negative electrode may form or provide a film to block ionic current (or a flow of ions) and induce shutdown of the rechargeable lithium battery if (e.g., when) the pH decreases and/or the temperature increases due to an abnormal reaction (e.g., an undesirable side reaction) of the rechargeable lithium battery, thereby improving or enhancing stability (e.g., chemical stability and/or physical stability) and reliability of the rechargeable lithium battery.

## Description

### BACKGROUND

### 1. Field

One or more embodiments of the present disclosure relate to a negative electrode and a rechargeable lithium battery including the negative electrode.

### 2. Description of the Related Art

Portable information devices, such as cell phones, laptops, smart phones, and/or the like, and/or electric vehicles have used rechargeable lithium batteries having high energy density and easy portability as a driving power source. Research has been actively conducted to use the rechargeable lithium batteries having high energy density as a driving power source for hybrid and/or electric vehicles and/or a power storage source for energy storage systems.

The rechargeable lithium batteries use an electrolyte including a lithium salt, and the lithium salt may work or serve as a source of lithium ions to enable operation of the rechargeable lithium batteries and serve to promote or enhance movement of the lithium ions between a positive electrode and a negative electrode. However, as the rechargeable lithium batteries are operated, there is a problem that a temperature and/or acidity of the electrolyte may increase, which research on securing or providing stability of the rechargeable lithium batteries is desired or required.

### SUMMARY

One or more aspects of embodiments of the present disclosure are directed toward a negative electrode capable of forming or providing a film at relatively low pH and/or at a relatively high temperature during abnormal reaction (e.g., undesirable side reaction) of a rechargeable lithium battery to block an ion current (or a flow of ions) and induce a shutdown of the rechargeable lithium battery and thereby, a rechargeable lithium battery achieving or providing improved or enhanced stability (e.g., chemical stability and/or physical stability) and reliability.

Additional aspects of embodiments will be set forth in part in the description which follows and, in part, will be apparent from the description or may be learned by practice of the presented embodiments of the disclosure.

In one or more embodiments, a negative electrode includes a negative electrode current collector; and a negative electrode active material layer on the negative electrode current collector; wherein the negative electrode active material layer includes a negative electrode active material and an additive, and the additive includes a compound that coagulates at conditions of pH 5.5 or lower and/or 90 °C or higher.

In one or more embodiments, a rechargeable lithium battery including the negative electrode as described in one or more embodiments, a positive electrode, and an electrolyte is provided.

The negative electrode according to one or more embodiments may form or provide a film to block ionic current and induce shutdown of the rechargeable lithium battery if (e.g., when) the pH decreases and/or the temperature increases due to an abnormal reaction (e.g., undesirable side reaction) of the rechargeable lithium battery, thereby improving or enhancing stability (e.g., chemical stability and/or physical stability) and reliability of the rechargeable lithium battery.

### BRIEF DESCRIPTION OF THE DRAWINGS

The accompanying drawings are included to provide a further understanding of embodiments of the subject matter of the present disclosure and are incorporated in and constitute a part of this specification. The drawings illustrate embodiments of the subject matter of the present disclosure and, together with the description, serve to explain principles of embodiments of subject matter of the present disclosure. In the drawings:
FIGS. 1-4 each is a schematic view schematically illustrating a rechargeable lithium battery according to one or more embodiments;
FIG. 5 is a differential scanning calorimetry (DSC) graph for Examples 1 to 3 and Comparative Example 1;
FIG. 6 is a differential capacity-voltage (dQ/dV) charge/discharge graph for Examples 1 to 3 and Comparative Example 1;
FIG. 7 is an electrochemical impedance analysis (EIS) graph for Examples 1 to 3 and Comparative Example 1;
FIG. 8 is a scanning electron microscope (SEM) image of the positive electrode according to Example 1; and
FIG. 9 is a SEM image of the positive electrode according to Comparative Example 1.

### DETAILED DESCRIPTION

Hereinafter, embodiments of the present disclosure will be described in more detail so that those of ordinary skill in the art can easily implement them. However, the subject matter of the present disclosure may be embodied in one or more suitable forms and should not be construed as being limited to the embodiments set forth herein.

The terminology used herein is used to describe particular embodiments only and is not intended to be limiting of the present disclosure. The singular expression includes the plural expression unless the context clearly dictates otherwise.

As utilized herein, the singular forms "a," "an," and "the" are intended to include the plural forms as well, unless the context clearly indicates otherwise. Further, the utilization of "may" if (e.g., when) describing embodiments of the present disclosure refers to "one or more embodiments of the present disclosure."

In the context of the present disclosure and unless otherwise defined, the terms "use," "using," and "used" may be considered synonymous with the terms "utilize," "utilizing," and "utilized," respectively.

As utilized herein, the term "about" or similar terms are used as terms of approximation and not as terms of degree, and are intended to account for the inherent deviations in measured or calculated values that would be recognized by those of ordinary skill in the art. "About" or "approximately," as used herein, is also inclusive of the stated value and refers to within an acceptable range of deviation for the particular value as determined by one of ordinary skill in the art, considering the measurement in question and the error associated with measurement of the particular quantity (e.g., the limitations of the measurement system). For example, "about" may refer to being within one or more standard deviations, or within ±30%, ±20%, ±10%, or ±5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, "combination thereof" refers a mixture, a laminate, a composite, a copolymer, an alloy, a blend, a reaction product, and/or the like of the constituents.

Herein, it should be understood that terms, such as "includes," "including," "have," or "having," are intended to designate the presence of an embodied feature, number, step, element, or a combination thereof, but it does not preclude the possibility of the presence or addition of one or more other features, number, step, element, or a combination thereof.

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the drawings, the thickness of layers, films, panels, regions, and/or the like may be exaggerated to effectively or suitably illustrate the technical contents of the present disclosure.

Like reference numerals or symbols refer to like elements throughout the specification.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

Herein, "layer" herein includes not only a shape formed or provided on the whole surface if (e.g., when) viewed from a plan view, but also a shape formed or provided on a partial surface.

Unless otherwise defined in the present disclosure, a particle diameter may be an average particle diameter. Also, a particle diameter may refer to an average particle diameter (D₅₀) where a cumulative volume is about 50 volume % in a particle size distribution. The average particle diameter may be measured by a method that is generally available to or generally used by those skilled in the art, for example, by a particle size analyzer and/or may also be measured by utilizing a transmission electron microscope (TEM) image and/or a scanning electron microscope (SEM) image. In one or more embodiments, an average particle diameter value may also be measured and obtained by utilizing a dynamic light scattering (DLS) method, performing data analysis, counting the number of particles for each particle size range, and calculating from this data. Also, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope image. In one or more embodiments, if (e.g., when) particles are spherical (e.g., substantially spherical), "diameter" or "size" refers to a particle diameter, and if (e.g., when) the particles are non-spherical (e.g., substantially non-spherical), the "diameter" or "size" refers to a major axis length.

Herein, "or" is not to be construed as an exclusive meaning, for example, "A or B" is construed to include A, B, A+B, and/or the like.

Herein, "metal" is interpreted as a concept including ordinary metals, transition metals, and metalloids (semi-metals).

Unless otherwise defined, all terms (including technical and scientific terms) used herein have substantially the same meaning as generally understood by one of ordinary skill in the art to which the present disclosure belongs. It will be further understood that terms, such as those defined in dictionaries that are generally available or generally used, should be interpreted as having a meaning that is consistent with their meaning in the context of the relevant art and will not be interpreted in an idealized or overly formal sense unless expressly so defined herein.

### Negative Electrode

In one or more embodiments, the negative electrode may include a negative electrode current collector; and a negative electrode active material layer on the negative electrode current collector.

### Negative Electrode Active Material Layer

The negative electrode active material layer according to one or more embodiments may include a negative electrode active material and an additive, wherein the additive may include a compound that coagulates at conditions of pH 5.5 or lower and/or 90 °C or higher (e.g., at a pH of 5.5 or lower and/or at a temperature of 90 °C or higher), and may optionally further include another type or kind of negative electrode active material, and may further include a binder and/or a conductive (e.g., electrically conductive) material (e.g., an electron conductor).

According to one or more embodiments, the negative electrode active material layer may have a loading level of greater than or equal to about 3.6 mg/cm², for example, about 3.6 mg/cm² to about 10 mg/cm² or about 3.6 mg/cm² to about 4.0 mg/cm². The negative electrode active material according to one or more embodiments may be advantageous or beneficial for the negative electrode active material layer to realize or provide such loading levels, and the negative electrode satisfying the foregoing loading level ranges may appropriately or suitably realize or provide a rechargeable lithium battery having relatively high capacity (e.g., electrical capacity) and relatively high energy density.

Herein, the term "loading level" refers to a weight per unit area of the electrode (mg/cm²). In general, an electrode with an active material layer formed on a current collector can be manufactured by applying a slurry containing an active material to a current collector, drying, and rolling. The loading level is designed in the process of applying the slurry to the current collector. The higher the loading level, the greater the amount of slurry applied, the thicker the thickness of the active material layer formed, and the lower the density of the electrode. Therefore, if the loading levels on both sides of the current collector are different, the density on both sides may be different, and for example, a low-density active material layer may be rolled more times to bring the density of both sides to a similar level.

### Additive

An electrolyte of a rechargeable lithium battery includes an organic solvent and a lithium salt, wherein the lithium salt is dissolved in the organic solvent and may serve as a source of supplying lithium ions in the rechargeable lithium battery to enable operation of the rechargeable lithium battery and promote or enhance movement of the lithium ions between a positive electrode and a negative electrode. Examples of the lithium salt may include LiPF₆, LiBF₄, LiSbF₆, LiAsF₆, LiClO₄, LiAlO₂, LiAlCl₄, LiPO₂F₂, LiCl, Lil, and/or the like, and, for example, the LiPF₆ may be decomposed by moisture (e.g., H₂O) and/or heat into LiF and PF₅, which is an acidic material, and then, may generate POF₃, which is a chemically reactive material. As a result, the moisture, the heat, and/or the like may increase a temperature and/or acidity of the electrolyte, and one or more chemically reactive materials generated therefrom may cause problems, such as destruction of the interface of the electrodes, dissolution of transition metals, decomposition of the solvent included in the electrolyte, and/or the like.

The additive may induce a shutdown by forming or providing a film to block a current of ions (or a flow of ions), if (e.g., when) a temperature raises by heat, which increases acidity, in situations, such as decomposition of the lithium salt, penetration of the rechargeable lithium battery, a short circuit, and/or the like. The additive may initiate a film-forming reaction at about 90 °C or higher and form or provide the film at a lower temperature than about 180 °C, a melting point of the lithium metal, which may effectively or suitably suppress desorption or penetration of the lithium (or may effectively or suitably reduce a degree or occurrence of desorption or penetration of the lithium) . The temperature where the additive forms or provide the film may be about 90 °C to about 180 °C, for example, about 100 °C to about 180 °C, about 100 °C to about 170 °C, or about 110 °C to about 170 °C. In one or more embodiments, the additive may initiate the film-forming reaction, for example, at pH 5.5 or lower, for example, pH 1.0 to pH 5.5, pH 2.0 to pH 5.0, or pH 3.0 to pH 4.5.

The additive may not deteriorate the electrolyte due to almost no reactivity (or non-chemical reactivity) with the electrolyte in the negative electrode and may form or provide the film even with a small amount to improve or enhance high temperature safety without deteriorating performance, while not lowering ionic conductivity of the negative electrode. The additive may be dispersed in the negative electrode to act as a type or kind of dispersant inside the negative electrode during normal (e.g., non-operation) and/or operation of the rechargeable lithium batteries or not act at all but if (e.g., when) the rechargeable lithium battery is exposed to high temperature conditions, may form or provide the film to perform or provide a shutdown function.

In one or more embodiments, the additive may include a compound coagulated at the conditions of pH 5.5 or lower and/or about 90 °C or higher, for example, casein, albumin, globulin, gelatin, or a combination thereof. In one or more embodiments, it is desirable that the additive include casein. If (e.g., when) the casein is included as the additive, the casein may be coagulated under the conditions of acidity of pH 5.5 or lower and/or about 90 °C or higher to form or provide a coagulation film, which may induce a shutdown of the rechargeable lithium battery.

The compound coagulated at conditions of pH 5.5 or lower and/or about 90 °C or higher may be included in an amount of about 0.1 wt% to about 10 wt% based on 100 wt% of a total negative electrode active material layer, for example, about 0.2 wt% to about 8.0 wt%, about 0.3 wt% to about 6.0 wt%, about 0.4 wt% to about 4.0 wt%, or about 0.5 wt% to about 2.0 wt%. If (e.g., when) the compound coagulated at conditions of pH 5.5 or lower and/or 90 °C or higher is included within the foregoing ranges, the compound may form or provide a coagulation film at set or predetermined acidity or higher to induce a shutdown and concurrently (e.g., simultaneously), suppress an increase in resistance (e.g., electrical resistance) (or reduce a degree or occurrence of an increase in resistance (e.g., electrical resistance)).

The negative electrode active material layer according to one or more embodiments may include a coagulation film induced from the compound coagulated at the conditions of pH 5.5 or lower and/or 90 °C or higher. The coagulation film may be a film formed or provided by coagulation of the compound under abnormal conditions, such as the temperature rising at or above 90 °C and/or the pH of the electrolyte solution falling below 5.5, for example, below 5.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example, crystalline carbon, amorphous (e.g., non-crystalline) carbon, or a combination thereof as a carbon-based negative electrode active material. The crystalline carbon may be irregular (e.g., substantially irregular), sheet-shaped (e.g., substantially sheet-shaped), flake-shaped (e.g., substantially flake-shaped), sphere-shaped (e.g., substantially sphere-shaped), and/or fiber-shaped (e.g., substantially fiber-shaped) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a material selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and/or tin (Sn).

The material capable of doping/dedoping lithium may be a Si-based negative electrode active material and/or a Sn-based negative electrode active material. The Si-based negative electrode active material may include silicon, a silicon-carbon composite, SiOₓ (wherein 0 < x ≤ 2; e.g., SiO₂), a Si-Q alloy (wherein Q may be an element selected from among an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), Pb, ruthenium (Ru), osmium (Os), hassium (Hs), rhodium (Rh), iridium (Ir), palladium (Pd), platinum (Pt), copper (Cu), silver (Ag), gold (Au), Zn, cadmium (Cd), boron (B), Al, gallium (Ga), Sn, In, thallium (TI), Ge, phosphorus (P), arsenic (As), Sb, bismuth (Bi), sulfur (S), selenium (Se), tellurium (Te), polonium (Po), and/or a combination thereof), and/or a combination thereof. The Sn-based negative electrode active material may be Sn, SnOₓ (wherein 0 < x ≤ 2; e.g., SnO₂), a Sn alloy, or a combination thereof.

The silicon-carbon composite may be a composite of silicon and amorphous (e.g., non-crystalline) carbon. The average particle diameter (D₅₀) of the silicon-carbon composite particles may be, for example, about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous (e.g., non-crystalline) carbon may also be between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, and/or a combination thereof. The amorphous (e.g., non-crystalline) carbon may include soft carbon, hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be about 10 wt% to about 50 wt% and a content (e.g., amount) of amorphous (e.g., non-crystalline) carbon may be about 50 wt% to about 90 wt% based on 100 wt% of the silicon-carbon composite. If (e.g., when) the composite includes silicon, amorphous (e.g., non-crystalline) carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous (e.g., non-crystalline) carbon may be about 20 wt% to about 40 wt% based on 100 wt% of the silicon-carbon composite.

A thickness of the amorphous (e.g., non-crystalline) carbon coating layer may be about 5 nm to about 100 nm. An average particle diameter (D₅₀) of the silicon particles (primary particles) may be about 10 nm to about 1 µm or about 10 nm to about 200 nm. The silicon particles may exist as silicon alone, in the form of a silicon alloy, and/or in an oxidized form. The oxidized form of silicon may be represented by SiOₓ (wherein 0 < x ≤ 2; e.g., SiO₂). In one or more embodiments, the atomic content (e.g., amount) ratio of Si:O, which refers to a degree of oxidation, may be about 99:1 to about 33:67. As used herein, if (e.g., when) a definition is not otherwise provided, an average particle diameter (D₅₀) refers to a particle where an accumulated volume is about 50 volume% in a particle distribution.

The Si-based negative electrode active material and/or the Sn-based negative electrode active material may be mixed with the carbon-based negative electrode active material. If (e.g., when) the Si-based negative electrode active material or the Sn-based negative electrode active material and the carbon-based negative electrode active material are mixed and used, the mixing ratio may be a weight ratio of about 1:99 to about 90:10.

### Binder

The binder may serve to well or suitably adhere the negative electrode active material particles to each other and also to adhere the negative electrode active material to the current collector. The binder may be a non-aqueous (e.g., water-insoluble) binder, an aqueous (e.g., water-soluble) binder, a dry binder, or a combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous (e.g., water-soluble) binder is utilized as the negative electrode binder, a thickener may be further included, and a cellulose-based compound may be further included as the thickener. As the cellulose-based compound, one or more of carboxymethyl cellulose, hydroxypropyl methylcellulose, methyl cellulose, or alkali metal salts thereof may be mixed and used. The alkali metal may be sodium (Na), potassium (K), or lithium (Li).

The dry binder may be a polymer material capable of becoming fiber (e.g., processable to become fiber), and may be, for example, polytetrafluoroethylene, polyvinylidene fluoride, a polyvinylidene fluoride-hexafluoropropylene copolymer, polyethylene oxide, or a combination thereof.

### Conductive Material

The conductive (e.g., electrically conductive) material (e.g., an electron conductor) may be included to provide electrode conductivity (e.g., electrical conductivity), and any suitable electrically conductive material may be used as a conductive material unless it causes a chemical change (e.g., an undesirable chemical change). Examples of the conductive (e.g., electrically conductive) material may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; MXene; and/or a mixture thereof.

### Negative Electrode Current Collector

The negative electrode current collector may include a copper foil, a nickel foil, a stainless steel foil, a titanium foil, a nickel foam, a copper foam, a polymer substrate coated with a conductive (e.g., electrically conductive) metal, and/or a combination thereof.

### Rechargeable Lithium Battery

In one or more embodiments, the rechargeable lithium battery may include the negative electrode as described in one or more embodiments; a positive electrode; and an electrolyte. In one or more embodiments, the electrolyte may be a liquid electrolyte and/or a solid electrolyte.

For example, in one or more embodiments, a rechargeable lithium battery may include the negative electrode as described in one or more embodiments, a positive electrode, a separator between the negative electrode and the positive electrode, and an electrolyte solution. As another example, an all-solid-state rechargeable lithium battery may include the negative electrode as described in one or more embodiments, a positive electrode, and a solid electrolyte layer between the negative electrode and the positive electrode.

Hereinafter, a rechargeable lithium battery utilizing an electrolyte solution is described as an example.

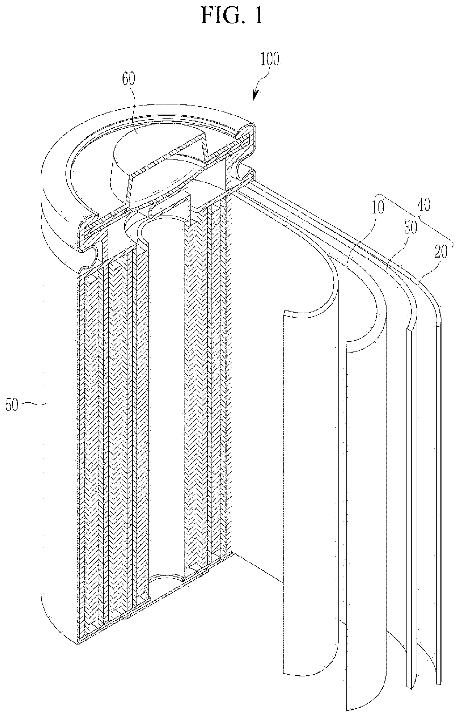

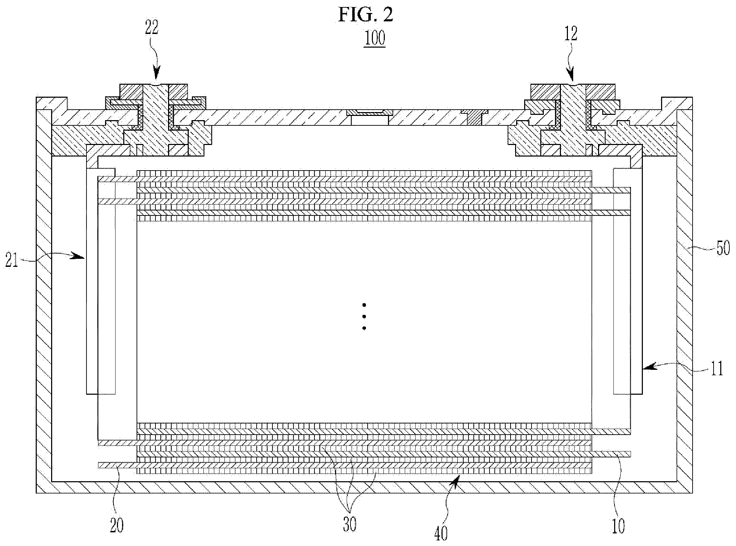

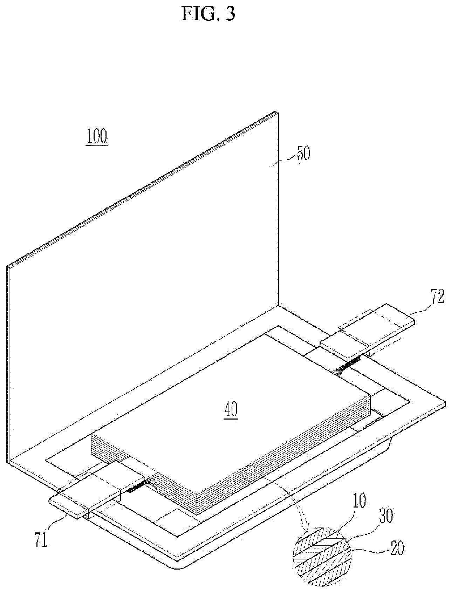

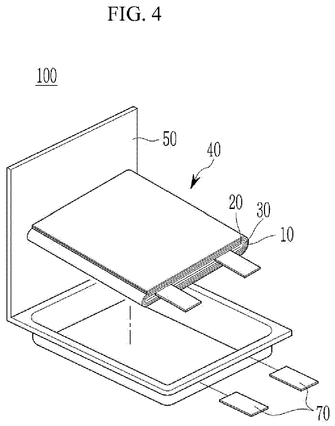

The rechargeable lithium battery may be classified into cylindrical, prismatic, pouch, or coin-type or -kind rechargeable lithium batteries, and/or the like depending on its shape. FIGS. 1 to 4 each is a schematic view illustrating the rechargeable lithium battery according to one or more embodiments, where FIG. 1 is a cylindrical rechargeable lithium battery, FIG. 2 is a prismatic rechargeable lithium battery, and FIGS. 3 and 4 are a pouch-shaped rechargeable lithium battery. Referring to FIGS. 1 to 4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with/in an electrolyte solution. The rechargeable lithium battery 100 may include a sealing member 60 that seals the case 50 as illustrated in FIG. 1. In FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 that serve as an electrical path to induce the current formed or provided in the electrode assembly 40 to the outside.

### Positive Electrode

The positive electrode may include a positive electrode current collector; and a positive electrode active material layer on the positive electrode current collector. The positive electrode active material layer may include a positive electrode active material and may further include a binder and/or a conductive (e.g., electrically conductive) material (e.g., an electron conductor).

The positive electrode active material may be a compound (a lithiated intercalation compound) capable of intercalating and deintercalating lithium. For example, one or more types or kinds of composite oxides of lithium and a metal selected from among cobalt, manganese, nickel, and combinations thereof may be used.

The composite oxide may be a lithium transition metal composite oxide, and one or more examples may include a lithium nickel-based oxide, a lithium cobalt-based oxide, a lithium manganese-based oxide, a lithium iron phosphate-based compound, a cobalt-free lithium nickel-manganese-based oxide, and/or a combination thereof.

As an example, a compound represented by any of the following chemical formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).

In the foregoing chemical formulas, A may be nickel (Ni), cobalt (Co), manganese (Mn), or a combination thereof; X may be Al, Ni, Co, Mn, Cr, Fe, Mg, Sr, V, a rare earth element, or a combination thereof; D may be oxygen (O), fluorine (F), S, P, or a combination thereof; G may be Al, Cr, Mn, Fe, Mg, lanthanum (La), cerium (Ce), Sr, V, or a combination thereof; and L¹ may be Mn, Al, or a combination thereof.

For example, the positive electrode active material may be a high-nickel positive electrode active material in which the nickel content (e.g., amount) is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high nickel-based positive electrode active material may achieve or provide relatively high capacity (e.g., electrical capacity) and may be applied to high-capacity (e.g., electrical capacity) and/or high-density rechargeable lithium batteries.

A content (e.g., amount) of the positive electrode active material may be about 90 wt% to about 98 wt%, for example, about 90 wt% to about 95 wt%, based on a total weight (e.g., based on 100 wt%) of the positive electrode active material layer. Each content (e.g., amount) of the binder and the conductive (e.g., electrically conductive) material (e.g., an electron conductor) may be about 1 wt% to about 5 wt% based on a total weight (e.g., based on 100 wt%) of the positive electrode active material layer.

The binder may serve to attach the positive electrode active material particles well or suitably to each other and also to attach the positive electrode active material well or suitably to the current collector, and examples thereof may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The conductive (e.g., electrically conductive) material (e.g., an electron conductor) may be included to provide electrode conductivity (e.g., electrical conductivity), and any suitable electrically conductive material may be used as a conductive material unless it causes a chemical change (e.g., an undesirable chemical change). Examples of the conductive (e.g., electrically conductive) material (e.g., an electron conductor) may include a conductive (e.g., electrically conductive) material including a carbon-based material, such as natural graphite, artificial graphite, carbon black, acetylene black, Ketjen black, a carbon fiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; MXene; and/or a mixture thereof.

The positive electrode current collector may be an aluminum foil, but embodiments of the present disclosure are not limited thereto.

### Electrolyte

An electrolyte for a rechargeable lithium battery may be, for example, an electrolyte solution, which may include a non-aqueous (e.g., water-insoluble) organic solvent and a lithium salt.

The non-aqueous (e.g., water-insoluble) organic solvent may serve as a medium to transmit ions taking part in the electrochemical reaction of a rechargeable lithium battery. The non-aqueous (e.g., water-insoluble) organic solvent may be a carbonate-based solvent, an ester-based solvent, an ether-based solvent, a ketone-based solvent, an alcohol-based solvent, an aprotic solvent, and/or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, 2-fluoroethyl acetate, 2,2-difluoroethyl acetate, methylpropionate, ethyl propionate, propylpropionate, butyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethanol, isopropyl alcohol, and/or the like, and the aprotic solvent may include nitriles, such as R-CN (wherein R may be a C₂ to C₂₀ linear, branched, or cyclic hydrocarbon group, a double bond, an aromatic ring, an ether group, and/or the like); amides, such as dimethylformamide; dioxolanes, such as 1,3-dioxolane, 1,4-dioxolane, and/or the like; sulfolanes, and/or the like.

The non-aqueous (e.g., water-insoluble) organic solvent may be used alone or in a mixture of two or more types or kinds, and if (e.g., when) two or more types or kinds are used in a mixture, a mixing ratio may be appropriately or suitably adjusted according to the desired or suitable rechargeable lithium battery performance, which is generally available to or generally used by those working in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, and/or an ethylene carbonate-based compound to improve or enhance rechargeable lithium battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply lithium ions in a rechargeable lithium battery, enable a basic operation of a rechargeable lithium battery, and improve or enhance transportation of the lithium ions between a positive electrode and a negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and/or lithium bis(oxalato) borate (LiBOB).

A concentration of lithium salt may be within the range of about 0.1 M to about 2.0 M. If (e.g., when) the concentration of lithium salt is within the foregoing range, the electrolyte solution may have appropriate or suitable ionic conductivity and viscosity, and thus excellent or suitable performance may be achieved or provided, and lithium ions may move effectively or suitably.

### Separator

Depending on the type or kind of the rechargeable lithium battery, a separator may be between the positive electrode and the negative electrode. The separator may include polyethylene, polypropylene, polyvinylidene fluoride, and/or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one surface or both surfaces (e.g., two opposite (opposite facing) surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (Teflon^{™}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and a second structural unit including at least one selected from among a structural unit derived from (meth)acrylic acid and/or (meth)acrylate and a structural unit derived from (meth)acrylamidosulfonic acid and/or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm or about 1 µm to about 5 µm.

Examples and Comparative Examples of the present disclosure are described in more detail herein. However, the following examples are only examples of the present disclosure, and embodiments of the present disclosure are not limited to the following examples.

### Example 1

A slurry for a negative electrode active material layer was prepared by mixing 94.0 wt% of graphite negative electrode active material, 2.0 wt% of casein, 1.5 wt% of carboxymethyl cellulose, 1.5 wt% of styrene butadiene rubber, and 1.0 wt% of carbon nanotube conductive (e.g., electrically conductive) material. The negative electrode active material layer slurry was coated on a copper foil current collector and then, dried and compressed to manufacture a negative electrode. Herein, the formed or resultant negative electrode active material layer had a loading level of 3.64 mg/cm².

A positive electrode active material layer slurry was prepared by mixing 98.5 wt% of a positive electrode active material having a composition of LiNi_{0.8}Co_{0.1}Mn_{0.1}O₂, 1.0 wt% of a polyvinylidene fluoride binder, and 0.5 wt% of a carbon nanotube conductive (e.g., electrically conductive) material, coated on an aluminum foil current collector, and then, dried and compressed to manufacture a positive electrode. Herein, the formed or resultant positive electrode active material layer had a loading level of 6 mg/cm².

A polytetrafluoroethylene separator with a thickness of 14 µm was used, and a basic electrolyte solution was prepared by mixing ethylene carbonate (EC), ethyl methyl carbonate (EMC), and dimethyl carbonate (DMC) in a volume ratio of 2:4:4 and dissolving 1.15 M LiPF₆ in the mixed solvent. 1.5 wt% of vinylene carbonate (VC) and 0.5 wt% of vinyl ethylene carbonate (VEC) were added to 98.0 wt% of the basic electrolyte solution to prepare an electrolyte solution, which was used to manufacture a rechargeable lithium battery cell.

### Example 2

A negative electrode and a rechargeable lithium battery cell were manufactured in substantially the same manner as in Example 1 except that a negative electrode active material layer with a loading level of 3.80 mg/cm² was formed by using 90.0 wt% of the graphite negative electrode active material and 6.0 wt% of the casein in the manufacture of the negative electrode.

### Example 3

A negative electrode and a rechargeable lithium battery cell were manufactured in substantially the same manner as in Example 1 except that a negative electrode active material layer with a loading level of 3.97 mg/cm² was formed by using 86.0 wt% of the graphite negative electrode active material and 10.0 wt% of the casein in the manufacture of the negative electrode.

### Example 4

A negative electrode and a rechargeable lithium battery cell were manufactured in substantially the same manner as in Example 1 except that a negative electrode active material layer with a loading level of 3.97 mg/cm² was formed by using 95.8 wt% of the graphite negative electrode active material and 0.2 wt% of the casein were used in the manufacture of the negative electrode.

### Example 5

A negative electrode and a rechargeable lithium battery cell were manufactured in substantially the same manner as in Example 1 except that a negative electrode active material layer with a loading level of 3.97 mg/cm² was formed by using 95.5 wt% of the graphite negative electrode active material and 0.5 wt% of the casein in the manufacture of the negative electrode.

### Comparative Example 1

A negative electrode and a rechargeable lithium battery cell were manufactured in substantially the same manner as in Example 1 except that a negative electrode active material layer with a loading level of 3.56 mg/cm² was formed by using 96.0 wt% of the graphite negative electrode active material but not the casein in the manufacture of the negative electrode.

### Comparative Example 2

A negative electrode and a rechargeable lithium battery cell were manufactured in substantially the same manner as in Example 1 except that trypsin was used instead of the casein in the manufacture of the negative electrode.

### Comparative Example 3

A negative electrode and a rechargeable lithium battery cell were manufactured in substantially the same manner as in Example 1 except that lysozyme was used instead of the casein in the manufacture of the negative electrode.

### Evaluation Example 1: Evaluation of Initial Charge/Discharge Capacity and Efficiency

The rechargeable lithium battery cells of Examples and Comparative Examples were charged to an upper limit voltage of 4.2 V at a constant current of 0.1 C and to 0.02 C at the constant voltage and then, discharged to a cut-off voltage of 3.0 V at 0.1 C at 25 °C for initial charge and discharge. In Table 1, initial charge capacity, initial discharge capacity, and a ratio of the latter to the former as efficiency are shown.

### Evaluation Example 2: Evaluation of Exothermic Characteristics

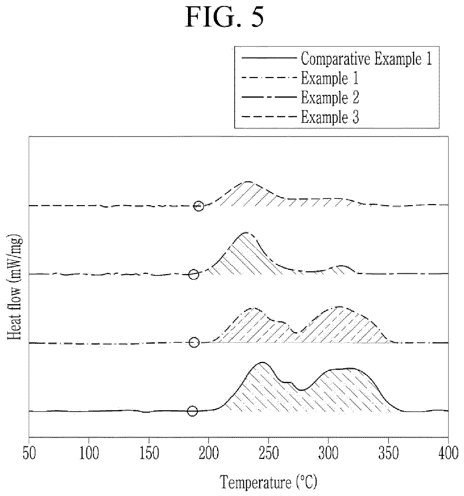

The rechargeable lithium battery cells of Examples and Comparative Examples were measured with respect to a heat flow according to a temperature through differential scanning calorimetry (DSC). The measurement was performed by using a differential scanning calorimeter and specifically, taking 15 mg of each electrode charged to 4.2 V (vs. Li/Li⁺), adding 20 µL of an electrolyte solution thereto, and heating it to 400 °C at 10 °C per minute, and the results are shown in Table 1 and FIG. 5.

**Table 1**

| | Charge capacity (mAh/g) | Discharge capacity (mAh/g) | Initial charge/ discharge efficiency (%) | Onset temperature (°C) | Heat flow (J/g) |
|---|---|---|---|---|---|
| Example 1 | 226.4 | 197.4 | 87.2 | 186.9 | 862.8 |
| Example 2 | 225.5 | 198.4 | 88.0 | 187.1 | 467.6 |
| Example 3 | 225.7 | 197.9 | 87.7 | 191.0 | 353.4 |
| Comparative Example 1 | 225.6 | 198.7 | 88.1 | 185.8 | 1143.9 |

Referring to Table 1 and FIG. 5, the rechargeable lithium battery cells of Examples 1 to 3 exhibited a high onset temperature and improved high temperature cycle-life characteristics due to reduced exothermicity. On the contrary, the rechargeable lithium battery cell including no casein according to Comparative Example 1 exhibited a low onset temperature and was confirmed to exhibit inferior high temperature cycle-life characteristics to those of Examples 1 to 3. In other words, it was confirmed that the casein reduced exothermicity and delayed an exothermic temperature due to an endothermic reaction at a high temperature, which led to suppressed heat accumulation within the rechargeable lithium battery cell.

### Evaluation Example 3: Differential Capacity Evaluation

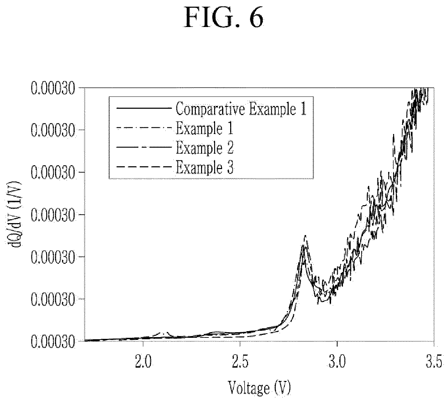

The rechargeable lithium battery cells of Examples and Comparative Examples proceeded with the initial charge and discharge as in Evaluation Example 1 and then, 3 times charged and discharged, and their charge and discharge differential curves are shown in FIG. 6. In the differential capacity-voltage (dQ/dV) charge and discharge graphs, an X-axis represents a voltage V, and a Y-axis represents a value (dQ/dV) obtained by differentiating charge/discharge capacity (Q) by the voltage (V).

Referring to FIG. 6, the rechargeable lithium battery cells of Examples 1 to 3 exhibited equivalent or higher dQ/dV than those of Comparative Example 1.

### Evaluation Example 4: Interface Resistance Evaluation

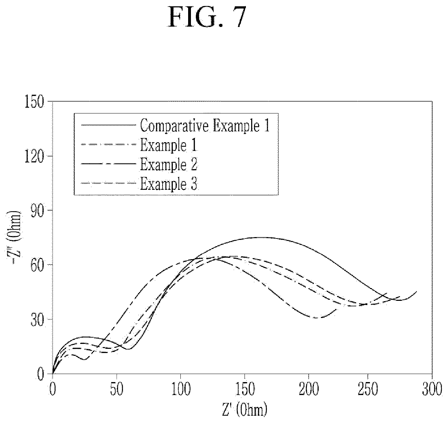

The rechargeable lithium battery cells of Examples and Comparative Examples were measured with respect to interface resistance on electrodes by using an electrochemical impedance spectroscope (EIS), and the results are shown in FIG. 7 and Table 2. An amplitude was ±10 mV, and a frequency was in a range of from 10 MHz to 1MHz. The resistance was measured by charging the cells at a constant current rate of 0.1 C to a Li negative electrode reference maximum voltage of 4.2 V and cutting off at a current rate of 0.05 C, while maintaining the constant voltage of 4.2 V, and then, putting a pause for 1 hour. Subsequently, the resistance was measured by using an impedance analyzer at an equilibrium voltage according to a 2-probe method.

**Table 2**

| | Interface resistance before 120 °C exposure (Ω) | Interface resistance after 120 °C exposure (Ω) |
|---|---|---|
| Comparative Example 1 (casein 0 wt%) | 21.4 | 26.4 |
| Example 4 (casein 0.2 wt%) | 22.3 | 79.3 |
| Example 5 (casein 0.5 wt%) | 22.2 | 5800 |
| Example 1 (casein 2.0 wt%) | 25.9 | 7900 |
| Example 2 (casein 6.0 wt%) | 68.0 | 9900 |
| Comparative Example 2 (trypsin 2.0 wt%) | 27.2 | 42.3 |
| Comparative Example 3 (lysozyme 2.0 wt%) | 28.2 | 39.9 |

Referring to Table 2, Examples 1, 2, and 5 including 0.5 wt% or more of casein exhibited a shutdown due to a sharp increase in interface resistance after exposure to 120 °C, but Comparative Example 1 including no casein, Example 4 including 0.2 wt% of casein, Comparative Example 2 including trypsin, and Comparative Example 3 including lysozyme exhibited no shut down even after the exposure to 120 °C. However, Example 2 including 6.0 wt% of casein exhibited relatively high interface resistance before exposure to 120 °C.

Referring to FIG. 7, the rechargeable lithium battery cells of Examples 1 to 3, compared with Comparative Example 1, exhibited reduced interface resistance, and, for example, the rechargeable lithium battery cell of Example 3 exhibited the lowest interface resistance. Low interface resistance (R_{ct}, charge-transfer resistance) facilitates intercalation/deintercalation of lithium ions during charge and discharge and maintains charge/discharge efficiency, thereby significantly improving cycle-life characteristics of batteries.

### Evaluation Example 5: Structure Analysis

The rechargeable lithium battery cells of Examples and Comparative Examples were examined with respect to structures through SEM.

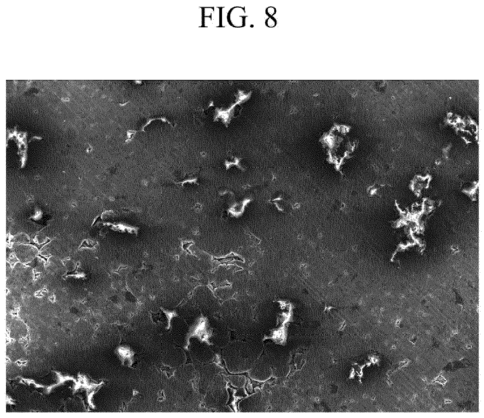

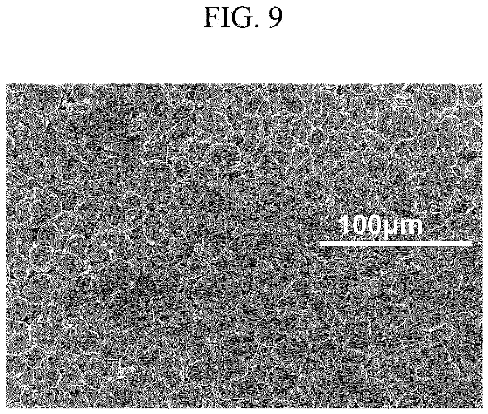

Referring to FIG. 8, the rechargeable lithium battery cell of Example 1 was confirmed that the casein was coagulated at high acidity to form a coagulation film. On the contrary, referring to FIG. 9, in the rechargeable lithium battery cell of Comparative Example 1, it was confirmed that a separate coagulation film was not formed.

While the subject matter of the present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims and equivalents thereof. It therefore will be understood that one or more embodiments described above are just illustrative but not limitative in all aspects.

### Reference Numerals

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A negative electrode, comprising:
a negative electrode current collector; and
a negative electrode active material layer on the negative electrode current collector;
wherein the negative electrode active material layer comprises a negative electrode active material and an additive, and
the additive is a compound that coagulates at conditions of pH 5.5 or lower or 90 °C or higher.

2. The negative electrode as claimed in claim 1, wherein:
the compound that coagulates at conditions of pH 5.5 or lower or 90 °C or higher comprises casein, albumin, globulin, gelatin, or a combination thereof.

3. The negative electrode as claimed in claim 1 or 2, wherein:
the compound that coagulates at conditions of pH 5.5 or lower or 90 °C or higher is casein.

4. The negative electrode as claimed in any one of claims 1 to 3, wherein:
the compound that coagulates at conditions of pH 5.5 or lower or 90 °C or higher is included in an amount of about 0.1 wt% to about 10 wt% based on 100 wt% of the negative electrode active material layer.

5. The negative electrode as claimed in any one of claims 1 to 3, wherein:
the compound that coagulates at conditions of pH 5.5 or lower or 90 °C or higher is included in an amount of about 0.5 wt% to about 2.0 wt% based on 100 wt% of the negative electrode active material layer.

6. The negative electrode as claimed in any one of claims 1 to 5, wherein:
the negative electrode active material layer further comprises a coagulation film derived from the compound that coagulates at conditions of pH 5.5 or lower or 90 °C or higher.

7. The negative electrode as claimed in any one of claims 1 to 6, wherein:
the negative electrode active material comprises a carbon-based negative electrode active material, a lithium metal, a lithium metal alloy, a silicon-based negative electrode active material, or a combination thereof.

8. The negative electrode as claimed in any one of claims 1 to 7, wherein:
the negative electrode active material layer further comprises a binder.

9. The negative electrode as claimed in any one of claims 1 to 8, wherein:
the negative electrode active material layer further comprises an aqueous binder and a thickener.

10. The negative electrode as claimed in any one of claims 1 to 9, wherein:
the negative electrode active material layer has a loading level of greater than or equal to about 3.6 mg/cm².

11. A rechargeable lithium battery, comprising:
the negative electrode as claimed in any one of claims 1 to 10;
a positive electrode; and
an electrolyte.

12. The rechargeable lithium battery as claimed in claim 11, wherein:
the positive electrode comprises a positive electrode current collector; and a positive electrode active material layer on the positive electrode current collector, and
the positive electrode active material layer comprises a positive electrode active material.

13. The rechargeable lithium battery as claimed in claim 12, wherein:
the positive electrode active material comprises a compound represented by one selected from among the following chemical formulas:
LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and LiₐFePO₄ (0.90≤a≤1.8).
